# EUROPEAN PATENT APPLICATION

(11) **EP 4 797 365 A1**
(43) Date of publication of application: **26.08.2026**
(21) Application number: 24878510.7
(22) Date of filing: 13.06.2024
(51) Int. Cl.: H01M 8/18, H01M 4/96, H01M 4/90

(54) **ALL-VANADIUM FLOW BATTERY SYSTEM**

(30) Priority: 18.10.2023 CN 202311345554
(71) Applicant: VRB Energy Inc., Grand Cayman (GB)
(72) Inventor: ZHAO, Zhiling, Beijing 101100 (CN); SONG, Changhui, Beijing 101100 (CN); MA, Hedi, Beijing 101100 (CN); LIU, Jia, Beijing 101100 (CN); LIU, Huichao, Beijing 101100 (CN); GE, Qiming, Beijing 101100 (CN)
(74) Representative: Ricker, Mathias
(86) International application number: PCT/CN2024/098868
(87) International publication number: WO 2025/081857

(57) **Abstract**

Provided in the present disclosure is an all-vanadium redox flow battery system. A cathode electrolyte is stored in a cathode electrolyte storage tank of the system, a vanadium cathode active material being added in the cathode electrolyte, an anode electrolyte being stored in an anode electrolyte storage tank, a vanadium anode active material being added in the anode electrolyte, the cathode electrolyte storage tank including a flexible conductive material loaded with a Prussian blue analog, the proportion of oxygen-containing functional groups in the flexible conductive material being 30% to 50%, and a content of the Prussian blue analog in the cathode electrolyte storage tank being 4 g/L to 480 g/L. In the present disclosure, the Prussian blue analog is synthesized on a surface of the flexible conductive material by using an electrochemical deposition method, and synthesis efficiency is high. Activated carbon felt or carbon cloth can deposit the Prussian blue analog more, thereby raising an upper limit of energy storage, and reducing the concentration of vanadium ions in the electrolyte to improve stability of the electrolyte.

## Description

### RELATED APPLICATIONS

This application claims priority to Chinese Patent Application No. 202311345554.0, filed October 18, 2023, and titled ALL-VANADIUM REDOX FLOW BATTERY SYSTEM, which is incorporated herein by reference in its entirety.

### TECHNICAL FIELD

The present disclosure relates to, but is not limited to, secondary battery technology, and more particularly to, but not limited to, an all-vanadium redox flow battery system and a method for improving stability of a cathode electrolyte of an all-vanadium redox flow battery.

### BACKGROUND

In response to the call of the "carbon peak and carbon neutrality" policy, the new energy industry is booming. Energy storage is a key part, and vanadium redox flow batteries have become a very promising energy storage method due to features thereof such as being suitable for large-scale energy storage, having the easily adjustable power capacity, etc. The energy storage capacity of vanadium redox flow batteries depends on the content of vanadium ions in the electrolyte thereof, the energy storage capacity thereof can be increased by increasing the concentration of the vanadium electrolyte. However, the stability of the vanadium cathode electrolyte having the high concentration is poor, and increasing the concentration blindly is not preferable. Therefore, a method for improving the energy density without sacrificing the stability of the cathode electrolyte is urgently needed.

Currently, a redox targeted reaction method may be used to increase the capacity and energy density while reducing the concentration of the electrolyte. The redox targeted reaction transfers energy from the electrolyte to a redox mediator paired therewith. Currently, the redox mediator is mainly the Prussian blue analog (PBA). The standard redox potential of the PBA is similar to that of VO²⁺/VO₂⁺, so that the PBA can be used to store energy by means of charge transfer between the PBA and VO²⁺/VO₂⁺.

However, the PBA prepared so far has the following problems. In an aspect, the particle size is too small, and a flow path of an electrolyte storage tank is prone to be clogged if a large quantity of the PBA is used. In another aspect, the PBA has poor conductivity and hydrophilicity, which are disadvantageous for sufficient capacity energy exchange with the electrolyte.

### SUMMARY

The following is a summary of the subject matter described in detail herein. The summary is not intended to limit the scope of protection of the claims.

Provided in embodiments of the present disclosure is an all-vanadium redox flow battery system. A cathode electrolyte is stored in a cathode electrolyte storage tank of the system, a vanadium cathode active material being added in the cathode electrolyte, an anode electrolyte being stored in an anode electrolyte storage tank, a vanadium anode active material being added in the anode electrolyte, the cathode electrolyte storage tank comprising a flexible conductive material loaded with a Prussian blue analog,
the proportion of oxygen-containing functional groups in the flexible conductive material being 30% to 50%, and being the percentage of oxygen-containing functional groups to all functional groups of the flexible conductive material,
the oxygen-containing functional groups comprising, but not limited to, any one or more selected from the group consisting of hydroxyl groups, carboxyl groups, aldehyde groups, and/or carbonyl groups, and
a content of the Prussian blue analog in the cathode electrolyte storage tank being 4 g/L to 480 g/L.

In one embodiment provided in the present disclosure, a loaded amount of the Prussian blue analog in the flexible conductive material is 0.01 g/cm² to 1.15 g/cm².

In one embodiment provided in the present disclosure, a concentration of vanadium ions of the vanadium cathode active material in the cathode electrolyte is 0.5 M to 1.7 M, and a concentration of vanadium ions of the vanadium anode active material in the anode electrolyte is 1 M to 2.5 M.

In one embodiment provided in the present disclosure, the flexible conductive material is any one or more selected from the group consisting of carbon felt, carbon cloth, carbon paper, and/or graphite felt.

In one embodiment provided in the present disclosure, the flexible conductive material is provided in the cathode electrolyte storage tank in such a manner as to have least resistance to flow of the cathode electrolyte.

In one embodiment provided in the present disclosure, the shape of the flexible conductive material is any one or more selected from the group consisting of a helical column and/or a tubular column, and an axial direction of the helical column and the tubular column is parallel to a liquid flow direction in the cathode electrolyte storage tank.

In one embodiment provided in the present disclosure, the Prussian blue analog is (VO)₆[Fe(CN)6]₃.

In one embodiment provided in the present disclosure, a method for preparing the flexible conductive material comprising the oxygen-containing functional groups and
the Prussian blue analog comprises:
performing liquid-phase oxidation treatment or cyclic voltammetry treatment on the flexible conductive material to increase the proportion of oxygen-containing functional groups in the flexible conductive material; and
depositing the Prussian blue analog by using the flexible conductive material having the increased proportion of oxygen-containing functional groups as a working electrode and using cyclic voltammetry or chronocoulometry.

In one embodiment provided in the present disclosure, the increasing the proportion of oxygen-containing functional groups in the flexible conductive material may comprise: immersing the flexible conductive material in an aqueous solution comprising 20 wt% to 50 wt% of hydrogen peroxide, then performing heating at a constant temperature for 1 h to 3 h, the temperature being 70°C to 90°C, and then performing washing by using deionized water to remove residual hydrogen peroxide; alternatively, preparing a mixed solution of concentrated sulfuric acid and concentrated nitric acid to treat the flexible conductive material, a volume ratio of the concentrated sulfuric acid to the concentrated nitric acid being 2 : 1 to 3 : 1, soaking the flexible conductive material in the mixed solution at room temperature for 10 h to 15 h, and then placing the same in a beaker containing deionized water to sonicate the same to remove residual acid from the flexible conductive material, a sonicating time being 15 min to 30 min;

Electrochemical treatment may be to add oxygen-containing functional groups to the flexible conductive material by using cyclic voltammetry, a potential lower limit range being (-0.4V) to (-0.1V), an upper limit range being 1.2V to 1.8V, a scan rate being 10 mV/s to 20 mV/s, and the number of scan cycles being 10 to 30. The electrolyte may be sulfuric acid of 1.5 M to 2.5 M.

In one embodiment provided in the present disclosure, a method for depositing the Prussian blue analog by
using cyclic voltammetry or chronocoulometry comprises:
depositing the Prussian blue analog on the flexible conductive material having the increased proportion of oxygen-containing functional groups by using the flexible conductive material having the increased proportion of oxygen-containing functional groups as the working electrode, using an aqueous solution of potassium ferricyanide, vanadyl sulfate, and sulfuric acid as an electrolyte, and using cyclic voltammetry or chronocoulometry.

Main reaction formulas of deposition are as follows:

**Fe(CN**)**₆³⁻ + e⁻ → Fe(CN**)**₆⁴⁻**

**3Fe(CN**)**₆⁴⁻ + 6VO²⁺ → (VO**)**₆[Fe(CN**)**₆**]**₃**

In one embodiment provided in the present disclosure, a concentration of the potassium ferricyanide is 0.1 M to 1 M, a concentration of the vanadyl sulfate being 0.1 M to 1.2 M, and a concentration of the sulfuric acid being 1 M to 3 M.

In one embodiment provided in the present disclosure, an initial scan direction of the cyclic voltammetry is a reduction direction, a scan rate being 10 mV/s to 50 mV/s, an upper limit range being 0.4V to 0.65V, a potential lower limit range being 0.05V to 0.2V, the number of scan cycles being 50 to 480, and the solution being always in a stirred state during deposition.

In one embodiment provided in the present disclosure, a potentiostatic range employed by the chronocoulometry is 0.05V to 0.2V.

In another aspect, provided in embodiments of the present disclosure is a method for improving stability of a cathode electrolyte of an all-vanadium redox flow battery. A flexible conductive material loaded with a Prussian blue analog is added to a cathode electrolyte storage tank of the all-vanadium redox flow battery.

In one embodiment provided in the present disclosure, the Prussian blue analog is (VO)₆[Fe(CN)6]₃.

Advantageous effects of the technical solution provided by the present disclosure comprise, but are not limited to, the following:
1. The carbon felt or the carbon cloth is activated. The oxygen-containing functional groups are increased. Improved hydrophilicity facilitates sufficient contact with the electrolyte and occurrences of redox targeted reactions.
2. PBA synthesis is performed by using the electrochemical deposition method, and a reaction site thereof can be precisely located within the range of an electrode region, thereby improving reaction efficiency.
3. The activated carbon felt or carbon cloth can deposit the PBA more, thereby raising an upper limit of energy storage, and reducing the concentration of vanadium ions in the electrolyte to improve stability of the electrolyte.
4. The helical vertical carbon felt or carbon cloth after deposition has a small effect on flow resistance to the electrolyte.

Other features and advantages of the present disclosure will be set forth in the following description, and in part will become apparent from the description, or may be understood by means of the implementation of the present disclosure. Other advantages of the present disclosure will be achieved and attained by means of the solutions described in the description.

### BRIEF DESCRIPTION OF THE DRAWINGS

The accompanying drawings are used to provide an understanding of the technical solutions of the present disclosure and constitute a part of the specification, and together with the embodiments of the present disclosure, are used to explain the technical solution of the present disclosure and not to limit the technical solution of the present disclosure.

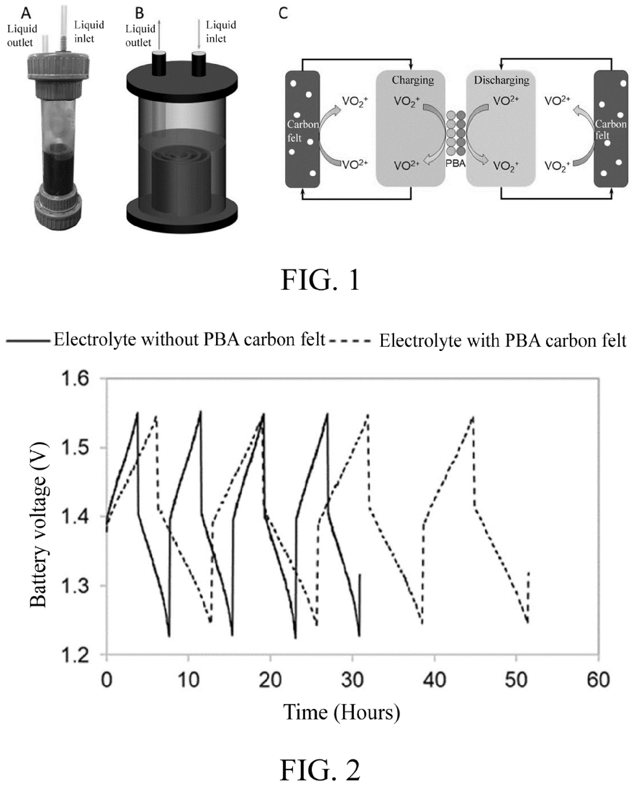

FIG. 1A is a photograph of actual carbon felt (hereinafter referred to as PBA carbon felt for short) loaded with a PBA and have increased oxygen-containing functional groups in a liquid storage tank. FIG. 1B is a schematic diagram of a PBA carbon felt in a cathode electrolyte storage tank. FIG. 1C is a schematic diagram of interaction between PBA carbon felt and pentavalent vanadium VO₂⁺ resulting from charging and interaction between PBA carbon felt and tetravalent VO²⁺ resulting from discharging.
FIG. 2 is a voltage diagram showing a cathode electrolyte storage tank with or without PBA carbon felt according to Example 1 of the present disclosure. As can be seen from FIG. 2, at the same current, a charge and discharge time of a vanadium redox flow battery system with PBA carbon felt is increased, thereby demonstrating that the capacity of the vanadium redox flow battery system is increased.

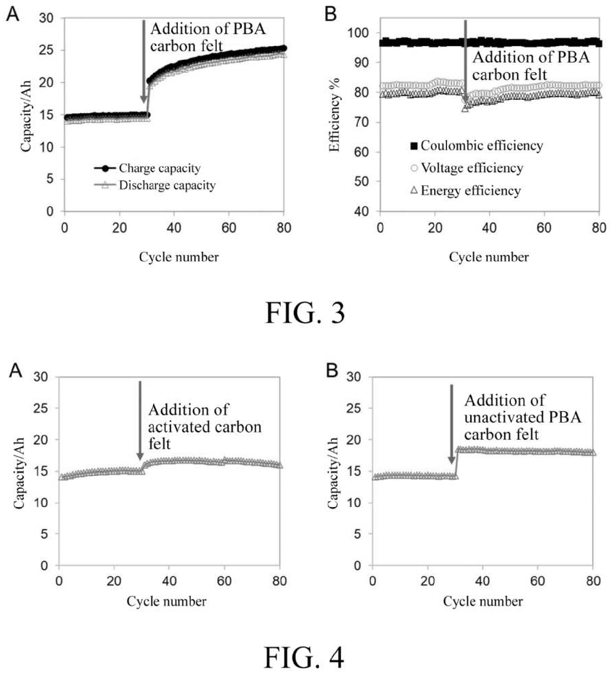

FIG. 3 is a schematic diagram of comparison of the battery capacity and efficiency before and after addition of PBA carbon felt in a cathode electrolyte storage tank according to Example 2 of the present disclosure.

A left diagram in FIG. 4 is a schematic diagram of the battery capacity after carbon felt that is only activated is added to a cathode electrolyte storage tank according to Comparative Example 1 of the present disclosure. A right diagram in FIG. 4 is a schematic diagram of the battery capacity after carbon felt not activated but loaded with a PBA is added to a cathode electrolyte storage tank according to Comparative Example 2 of the present disclosure.

### DETAILED DESCRIPTION

To make the objectives, technical solutions, and advantages of the present disclosure clearer, the following describes the examples of the present disclosure in detail. It should be noted that the examples in the present disclosure and the features in the examples may be arbitrarily combined with each other as long as no conflict occurs.

In examples and comparative examples of the present disclosure, the concentration of the concentrated sulfuric acid was 98%, and the concentration of the concentrated nitric acid was 68%. The Ag/AgCl reference electrode CHI111 was purchased from Shanghai Chenhua Instrument Co., Ltd., and the platinum sheet was purchased from Ledonlab.

### Example 1

A 20 cm × 8 cm carbon felt was cut out, and a mixed solution of concentrated sulfuric acid and concentrated nitric acid of the volume ratio of 5 : 2 was prepared. The mixed solution was weighed, and placed in a beaker. The carbon felt was placed in the beaker, and was soaked at room temperature for 10 h. Then, the carbon felt was placed in a beaker containing deionized water so as to sonicate the same to remove residual acid from the carbon felt, a sonicating time being 25 min. Then, the carbon felt was placed in an oven so as to be dried. Oxygen-containing functional groups of the carbon felt were increased by using a three-electrode system and by using cyclic voltammetry. Specifically: the dried carbon felt was used as a working electrode. Ag/AgCl was used as a reference electrode. The platinum sheet was used a counter electrode. The potential range was -0.1V to 1.3V. The scan rate was 10 mV/s. The number of scan cycles was 10. The electrolyte was a sulfuric acid solution of 2M. After electrochemical treatment, the carbon felt was washed with deionized water and dried.

PBA((VO)₆[Fe(CN)₆]₃ was deposited on the activated carbon felt by using the above three-electrode system. The activated carbon felt was used as the working electrode. Ag/AgCl was used as the reference electrode. The platinum sheet was used as the counter electrode. A mixed aqueous solution of potassium ferricyanide, vanadyl sulfate, and sulfuric acid was prepared, the concentration of potassium ferricyanide being 0.15 M, the concentration of vanadyl sulfate being 0.3 M, and the concentration of sulfuric acid being 3 M. Electrodeposition was performed by using cyclic voltammetry, the scan direction being a reduction direction, the potential range being 0.05V to 0.5V, 0.5 V being the initial potential, the scan rate being 20 mV/s, and the number of scan cycles being 80. The solution was always in the stirred state during the electrodeposition.

The proportion of oxygen-containing functional groups in the prepared carbon felt was 40%. The loaded amount of the Prussian blue analog in the flexible conductive material was 0.66 g/cm². That is, a total of 105.6g of Prussian blue analog was in the cathode electrolyte storage tank.

The carbon felt after deposition was assembled vertically to be helical and tubular. A distance between two adjacent layers of the helix was 1.5 cm. In the cathode electrolyte tank, the axial direction thereof was parallel to the flow direction of the cathode solution as shown in FIG. 1.

A battery was assembled, and was subjected to constant-current charging and discharging, the current being 1 A. The effective area of the reaction of the battery was 10 cm². The structure was a single-battery structure. The valence states of the initial vanadium electrolytes of both the cathode and the anode were 3.5. The amount of the used cathode electrolyte was 0.25 L, and the amount of the used anode electrolyte was 0.5 L. The concentrations of the cathode electrolyte and the anode electrolyte were both 1 M. First, the electrolyte containing no PBA carbon felt in the cathode solution storage tank was subjected to 50 charge-discharge cycles, and the battery voltage curve of the last 4 cycles was represented by the solid line in FIG. 2. Then, the electrolyte containing the PBA carbon felt in the cathode solution storage tank was subjected to 50 charge-discharge cycles, and the battery voltage curve of the last 4 cycles was represented by the dotted line in FIG. 2. The comparison result in FIG. 2 shows that the carbon felt modified by the PBA can greatly extend the charge and discharge time, thereby demonstrating the increase in the battery capacity and energy. According to calculation, after the PBA carbon felt was added to the electrolyte, the battery capacity was increased from 3.75 Ah to 6.47 Ah.

### Example 2

A 60 cm × 20 cm carbon felt was cut out, and then the carbon felt was activated. The carbon felt was immersed in an aqueous solution including 25 wt% of hydrogen peroxide. Heating was performed at a constant temperature of 80°C for 1.5 h. After the heating was completed, washing was performed by using deionized water to remove residual hydrogen peroxide from the surface of the carbon felt. Then, the carbon felt was placed in an oven so as to be dried. Oxygen-containing functional groups of the carbon felt were increased by using a three-electrode system and by using cyclic voltammetry. Specifically: the dried carbon felt was used as a working electrode. Ag/AgCl was used as a reference electrode. A graphite sheet was used a counter electrode. The potential range was -0.2V to 1.2V. The scan rate was 15mV/s. The number of scan cycles was 15. The electrolyte was a sulfuric acid solution of 2M. After electrochemical treatment, the carbon felt was washed with deionized water and dried.

PBA((VO)₆[Fe(CN)₆]₃ was deposited on the activated carbon felt by using the three-electrode system. The activated carbon felt was used as the working electrode. Ag/AgCl was used as the reference electrode. The graphite sheet was used as the counter electrode. A mixed aqueous solution of potassium ferricyanide, vanadyl sulfate, and sulfuric acid was prepared, the concentration of potassium ferricyanide being 0.1 M, the concentration of vanadyl sulfate being 0.25 M, and the concentration of sulfuric acid being 3 M. Electrodeposition was performed by using chronocoulometry, the potential being 0.1V, the potentiostatic duration being 2.3 h, and the solution was always in the stirred state during the electrodeposition.

The proportion of oxygen-containing functional groups in the prepared carbon felt was 45%. The loaded amount of the Prussian blue analog in the flexible conductive material was 0.35 g/cm². A total of 420g of Prussian blue analog was in the cathode electrolyte storage tank.

The carbon felt after deposition was assembled vertically to be helical and tubular. A distance between two adjacent layers of the helix was 5 cm. In the cathode electrolyte tank, the axial direction thereof was parallel to the flow direction of the cathode solution as shown in FIG. 1.

A battery was assembled, and was subjected to constant-current charging and discharging, the current being 25A. The effective area of the reaction of the battery was 250 cm². Two single batteries were combined. The valence states of the initial vanadium electrolytes of both the cathode and the anode were 3.5. The amount of the used cathode electrolyte was 1 L, and the amount of the used anode electrolyte was 2 L. The concentrations of the cathode electrolyte and the anode electrolyte were both 1 M. First, the electrolyte containing no PBA carbon felt in the cathode solution storage tank was subjected to 30 charge-discharge cycles, and the battery charge and discharge capacities and efficiency were shown in FIG. 3. Then, the electrolyte containing the PBA carbon felt in the cathode solution storage tank was subjected to 50 charge-discharge cycles, and the battery charge and discharge capacities and efficiency were shown in FIG. 3. The comparison result in FIG. 3 shows that after the PBA carbon felt was added to the cathode solution storage tank, the charge and discharge capacities were both increased, and were increased from about 14.5 Ah to 25.3 Ah. After the PBA carbon felt was added, the charge and discharge efficiency of the battery decreased slightly first, and then increased gradually to be stable. Finally, the battery efficiency value without the PBA carbon felt can be restored.

### Comparative Example 1

The present comparative example differs from Example 2 only in that deposition of the PBA on the activated carbon felt was not involved, and the other steps, processes, and raw materials were exactly the same as those in Example 2.

The proportion of oxygen-containing functional groups in the prepared carbon felt was 42%. A total of 0g of Prussian blue analog was in the cathode electrolyte storage tank.

The activated carbon felt was assembled vertically to be helical and tubular as in Example 2. A distance between two adjacent layers of the helix was 5 cm.

A battery was assembled in exactly the same manner as in Example 2, and was subjected to constant-current charging and discharging, the current being 25A. First, the electrolyte containing no PBA carbon felt in the cathode solution storage tank was subjected to 30 charge-discharge cycles. Then, the electrolyte containing the activated carbon felt in the cathode solution storage tank was subjected to 50 charge-discharge cycles. The battery discharge capacity was shown in FIG. 4A. Comparison between FIG. 4A and FIG. 3A shows that the battery capacity was slightly increased (increased from 15 Ah to about 16.5 Ah) after the carbon felt that was only activated was added to the cathode solution storage tank. The effect was no where near the effect of adding the PBA carbon felt in the cathode solution storage tank.

### Comparative Example 2

The present comparative example differs from Example 2 only in that activation treatment of the carbon felt was not involved, and the PBA was directly deposited on the purchased carbon felt. The other steps, processes, and raw materials were exactly the same as those in Example 2.

The loaded amount of the Prussian blue analog in the flexible conductive material was 0.1 g/cm².

The carbon felt after deposition was assembled vertically to be helical and tubular. A distance between two adjacent layers of the helix was 5 cm.

A battery was assembled in exactly the same manner as in Example 2, and was subjected to constant-current charging and discharging, the current being 25A. First, the electrolyte containing no PBA carbon felt in the cathode solution storage tank was subjected to 30 charge-discharge cycles. Then, the electrolyte containing the unactivated PBA carbon felt in the cathode solution storage tank was subjected to 50 charge-discharge cycles. The battery discharge capacity was shown in FIG. 4B. Comparison between FIG. 4B and FIG. 3A and between FIG. 4B and FIG. 4A shows that the battery capacity was increased (increased from 15 Ah to about 18 Ah) after the unactivated PBA carbon felt was added to the cathode solution storage tank. The effect was better than the effect (the increase from 15 Ah to about 16.5 Ah) of only activating the carbon felt in FIG. 4A, but was still not as good as the effect (in FIG. 3A, the increase from about 14.5 Ah to 25.3 Ah) of adding the PBA carbon felt in the cathode solution storage tank.

## Claims

1. An all-vanadium redox flow battery system, **characterized in that** a cathode electrolyte is stored in a cathode electrolyte storage tank of the system, a vanadium cathode active material being added in the cathode electrolyte, an anode electrolyte being stored in an anode electrolyte storage tank, a vanadium anode active material being added in the anode electrolyte, the cathode electrolyte storage tank comprising a flexible conductive material loaded with a Prussian blue analog,
the proportion of oxygen-containing functional groups in the flexible conductive material being 30% to 50%, and
a content of the Prussian blue analog in the cathode electrolyte storage tank being 4 g/L to 480 g/L.

2. The system according to claim 1, wherein a loaded amount of the Prussian blue analog in the flexible conductive material is 0.01 g/cm² to 1.15 g/cm².

3. The system according to claim 1, wherein a concentration of vanadium ions of the vanadium cathode active material in the cathode electrolyte is 0.5 M to 1.7 M, and a concentration of vanadium ions of the vanadium anode active material in the anode electrolyte is 1 M to 2.5 M.

4. The system according to claim 1, wherein the flexible conductive material is any one or more selected from the group consisting of carbon felt, carbon cloth, carbon paper, and/or graphite felt.

5. The system according to claim 1, wherein the flexible conductive material is provided in the cathode electrolyte storage tank in such a manner as to have least resistance to flow of the cathode electrolyte.

6. The system according to claim 1, wherein the shape of the flexible conductive material is any one or more selected from the group consisting of a helical column and/or a tubular column, and an axial direction of the helical column and the tubular column is parallel to a liquid flow direction in the cathode electrolyte storage tank.

7. The system according to claim 1, wherein the Prussian blue analog is (VO)₆[Fe(CN)₆]₃.

8. The system according to claim 1, wherein a method for preparing the flexible conductive material comprising the oxygen-containing functional groups and the Prussian blue analog comprises:
performing liquid-phase oxidation treatment or cyclic voltammetry treatment on the flexible conductive material to increase the proportion of oxygen-containing functional groups in the flexible conductive material; and
depositing the Prussian blue analog by using the flexible conductive material having the increased proportion of oxygen-containing functional groups as a working electrode and using cyclic voltammetry or chronocoulometry.

9. The system according to claim 8, wherein a method for depositing the Prussian blue analog by using cyclic voltammetry or chronocoulometry comprises:
depositing the Prussian blue analog on the flexible conductive material having the increased proportion of oxygen-containing functional groups by using the flexible conductive material having the increased proportion of oxygen-containing functional groups as the working electrode, using an aqueous solution of potassium ferricyanide, vanadyl sulfate, and sulfuric acid as an electrolyte, and using cyclic voltammetry or chronocoulometry,
a concentration of the potassium ferricyanide being 0.1 M to 1 M, a concentration of the vanadyl sulfate being 0.1 M to 1.2 M, a concentration of the sulfuric acid being 1 M to 3 M,
an initial scan direction of the cyclic voltammetry being a reduction direction, a scan rate being 10 mV/s to 50 mV/s, an upper limit range being 0.4V to 0.65V, a potential lower limit range being 0.05V to 0.2V, the number of scan cycles being 50 to 480,
a potentiostatic range employed by the chronocoulometry being 0.05V to 0.2V, and a potentiostatic duration being 0.5 h to 10 h.

10. A method for improving stability of a cathode electrolyte of an all-vanadium redox flow battery, **characterized in that** a flexible conductive material loaded with a Prussian blue analog is added to a cathode electrolyte storage tank of the all-vanadium redox flow battery,
the Prussian blue analog being (VO)₆[Fe(CN)₆]₃.
